## Europäisches Patentamt

## European Patent Office

## Office européen des brevets

(11) Veröffentlichungsnummer : **0 063 281**
**B1**

(12) # EUROPÄISCHE PATENTSCHRIFT

(45) Veröffentlichungstag der Patentschrift :
15.05.85

(21) Anmeldenummer : 82102789.3

(22) Anmeldetag : 01.04.82

(51) Int. Cl.⁴ : **B 60 J   5/06**, E 05 D 15/10

(54) **Vorrichtung zur Führung einer Schwenkschiebetür am Fahrerhaus eines Fahrzeuges.**

(30) Priorität : 02.04.81 DE 3113311

(43) Veröffentlichungstag der Anmeldung :
27.10.82 Patentblatt 82/43

(45) Bekanntmachung des Hinweises auf die Patenterteilung : 15.05.85 Patentblatt 85/20

(84) Benannte Vertragsstaaten :
CH DE FR GB IT LI NL SE

(56) Entgegenhaltungen :
DE-A- 2 154 426
DE-A- 2 201 622
DE-B- 2 020 576

(73) Patentinhaber : FIAT Veicoli Industriali S.p.A.
Via Puglia 35
I-10100 Turin (IT)

(72) Erfinder : Giacometti, Giorgio, Dr. Ing.
Via Gioyan Battista Corniani 25
I-25100 Brescia (IT)
Erfinder : Zilioli, Antonio
Via Collebeato 33/Q
I-25100 Brescia (IT)

(74) Vertreter : Socha, Peter
Iveco Magirus AG Postfach 2740 Schillerstrasse 2
D-7900 Ulm (DE)

## Beschreibung

Die Erfindung bezieht sich auf eine Vorrichtung zur Führung einer Schwenkschiebetür am Fahrerhaus eines Fahrzeuges, insbesondere eines Nutzfahrzeuges, deren in Öffnungsrichtung liegende Türseite auf halber Türhöhe mittels eines Gelenkhebels aus der Karosserieebene geschwenkt und in einer an der Seitenwand der Karosserie befestigten Schiene verschiebbar geführt wird, wobei die der Öffnungsrichtung abgewandte Türseite über im Bereich der oberen und unteren Türseite angeordnete Rollen in an der Karosserie befestigten Führungsschienen gehalten ist. Eine derartige Tür wurde der Öffentlichkeit vor dem Prioritätstag zugänglich gemacht (Art. 54(2) EPÜ).

Es sind Fahrzeuge mit Schiebetüren bekannt, deren Führungsschienen jeweils außen an der Karosserie angebracht sind. Dies bedeutet, daß die Schiebetür jeweils um ihre Türdicke nach außen aus der Karosseriekontur vorsteht. Hierbei ist es von Nachteil, daß durch die vorstehende Tür das ästhetische Erscheinungsbild der Karosserie beeinträchtigt wird. Weitere Nachteile sind der höhere Luftwiderstand sowie die erhöhte Unfallgefahr infolge der aus der Karosserie nach außen vorstehenden Türkanten und Führungsschienen. Außerdem hat sich ergeben, daß die Abdichtung solcher Schiebetüren besonders schwierig ist, zumal sie mit einfachen Dichtungsmitteln nicht gelöst werden kann. Schließlich ist noch auf den Nachteil hinzuweisen, daß die bekannten Schiebetüren in geschlossener Stellung sehr leicht zu Vibration neigen, die mit Klappergeräuschen, Undichtigkeiten und vorzeitigem Verschleiß der Türführungen verbunden sind.

Ausgehend von dem bekannten Stand der Technik liegt der Erfindung die Aufgabe zugrunde, für Schiebetüren von Fahrzeugen eine Führungsvorrichtung zu schaffen, die zum einen die Nachteile bekannter Führungsvorrichtungen vermeidet und zum anderen so beschaffen ist, daß serienmäßig vorhandene und normalerweise am Fahrzeug mittels Scharnieren schwenkbar angebrachte Türen ohne Veränderungen an der Tür und am karosserieseitigen Türausschnitt als Schiebetür verwendet werden können.

Diese Aufgabe wird bei einer Vorrichtung der eingangs erwähnten Gattung erfindungsgemäß durch folgende Merkmale gelöst :

a) Die obere Führung der Tür weist einen an der Innenseite der Fahrerhauskarosserie im Bereich des Daches angebrachten und sich im wesentlichen über die Breite des Türausschnittes erstreckenden ortsfesten Schienenabschnitt und einen an der Türinnenseite befestigten längenveränderlichen Schienenabschnitt auf ;

b) der längenveränderliche Schienenabschnitt besteht aus zwei teleskopartig relativ zueinander verschiebbaren Schienenteilen, wobei das erste Schienenteil an der Tür befestigt ist und an dem zweiten relativ zur Tür verschiebbaren Schienenteil am vorderen Ende eine Rolle gelagert ist ;

c) die beiden relativ zueinander verschiebbaren Schienenteile überdecken sich in geschlossener Stellung der Tür am weitesten ;

d) in der ersten Öffnungsphase der Schwenkschiebetür verschiebt sich die in dem ortsfesten Schienenabschnitt geführte Rolle mit gegen Relativbewegungen mittels eines Sperrgliedes arretierten Schienenteilen in Öffnungsrichtung bis zu einer vorläufigen Offenstellung, in der die Tür teilweise geöffnet ist ;

e) das Sperrglied ist im Bereich der Rolle an dem verschiebbaren Schienenteil befestigt und wird bei Erreichen der vorläufigen Offenstellung über einen im Bereich des in Öffnungsrichtung liegenden Endes des ortsfesten oberen Schienenabschnittes an der Karosserie befestigten Anschlag zur Freigabe der Relativbewegung der Schienenteile des längenveränderlichen Schienenabschnitts entriegelt bzw. umgekehrt während der Schließbewegung der Tür wieder verriegelt.

Die erfindungsgemäße Ausbildung der Türführung hat den Vorteil, daß serienmäßig vorhandene und normalerweise als Schwenktüren verwendete Fahrerhaustüren nunmehr als Schiebetüren eingesetzt werden können. Damit entfällt die bisher übliche spezielle Anfertigung besonderer Schiebetüren, was zur Vereinfachung der Lagerhaltung und auch zu Einsparungen bei der Herstellung solcher Schwenkschiebetüren führt. Ein weiterer Vorteil besteht darin, daß durch die Verwendung vorhandener serienmäßiger Türen keine Veränderungen an dem karosserieseitigen Türausschnitt erforderlich sind. Vorteilhaft ist weiterhin, daß durch die erfindungsgemäße Türführung die Schwenkschiebetür in geschlossener Stellung in die Karosseriekontur vollständig einschwenkbar ist, so daß die Tür keine nach außen vorstehenden Teile hat, durch die der ästhetische Gesamteindruck des Fahrzeuges beeinträchtigt wird. Bei geschlossener Tür ist also von außen nicht zu erkennen, ob es sich um eine Schiebe- oder Schwenktür handelt. Diese Vorteile werden bei der Erfindung mit besonders einfachen und sicheren Mitteln erreicht.

Es sind zwar grundsätzlich ausschwenkbare Schiebetüren bekannt. Jedoch ergeben diese bekannten Anordnungen im Vergleich zur vorliegenden Erfindung vor allem einen erheblichen konstruktiven und Montageaufwand insbesondere hinsichtlich der Führungseinrichtungen für die Tür sowie gegebenenfalls durch zusätzlich erforderliche Schwenkschiebe-Antriebsvorrichtungen.

Um die karosseriefeste Schiene möglichst weit im Innenraum des Fahrerhauses anordnen zu können ist es zweckmäßig, wenn die Rolle über eine Konsole mit der Schiene verbunden ist.

Eine raumsparende und für die Funktion günstige Unterbringung des Sperrgliedes wird dadurch erreicht, daß das Sperrglied an der Konsole angebracht ist.

Gemäß einem weiteren Gedanken der Erfindung besteht das Sperrglied aus einem an der Konsole schwenkbar gelagerten Schwinghebel und zwei mit diesem zusammenwirkenden Riegelplatten. Dabei ist eine Riegelplatte schwenkbar am schienenseitigen Ende der Konsole angeordnet.

Um ein gegenseitiges Verschwenken der Riegelplatte über den Schwinghebel zu erreichen ist vorgesehen, daß die Riegelplatten jeweils zwei mit unterschiedlichem Radius von ihrer Schwenkachse entfernt liegende Anlageflächen aufweisen, an denen der Schwinghebel je nach Stellung der Tür wechselweise anliegt.

Zur Verriegelung des längenveränderlichen Schienenabschnittes hat gemäß der Erfindung die zugehörige Riegelplatte einen Schlitz, in den ein an dem in Fahrtrichtung vorne liegenden Ende der türfesten Schiene angebrachter Stift einführbar ist.

Damit nach Erreichen einer vorläufigen Offenstellung der Tür die gegenseitig verriegelten Schienen selbsttätig entriegelt werden können, wird die an der Rolle vorgesehene Riegelplatte von einem auf der Rollenlaufachse gelagerten Nocken verschwenkt, der seinerseits mit einem an dem der Fahrtrichtung abgewandten rückseitigen Ende des karosseriefesten Schienenabschnittes angebrachten Anschlages zusammenwirkt. Schließlich ist es vorteilhaft, wenn die Schwenkbewegung der Riegelplatte in ihre Sperrstellung über eine Feder unterstützt wird.

In der Zeichnung ist ein Ausführungsbeispiel der Erfindung dargestellt.

Es zeigen :

Figur 1 in einer Seitenansicht ein Nutzfahrzeug mit der erfindungsgemäßen Schwenkschiebetür.

Figur 2 die obere Führung der Schwenkschiebetür im Schnitt nach der Linie II-II aus Fig. 1.

Figur 3 die Führungsrolle des türseitig festen Schienenabschnittes in einem senkrechten Querschnitt.

Figur 4 in einer Draufsicht die Stellung der oberen Führungsschienen bei geschlossener Schwenkschiebetür.

Figur 5 die Stellung der Führungsschienen bei herausgeschwenkter Schiebetür.

Figur 6 die Stellung der Führungsschienen in einer vorläufigen Offenstellung der Schwenkschiebetür.

Figur 7 die Stellung der oberen Führungsschienen in der endgültigen Offenstellung der Schwenkschiebetür.

Figur 8 in einer Draufsicht das Sperrglied in vergrößerter Darstellung.

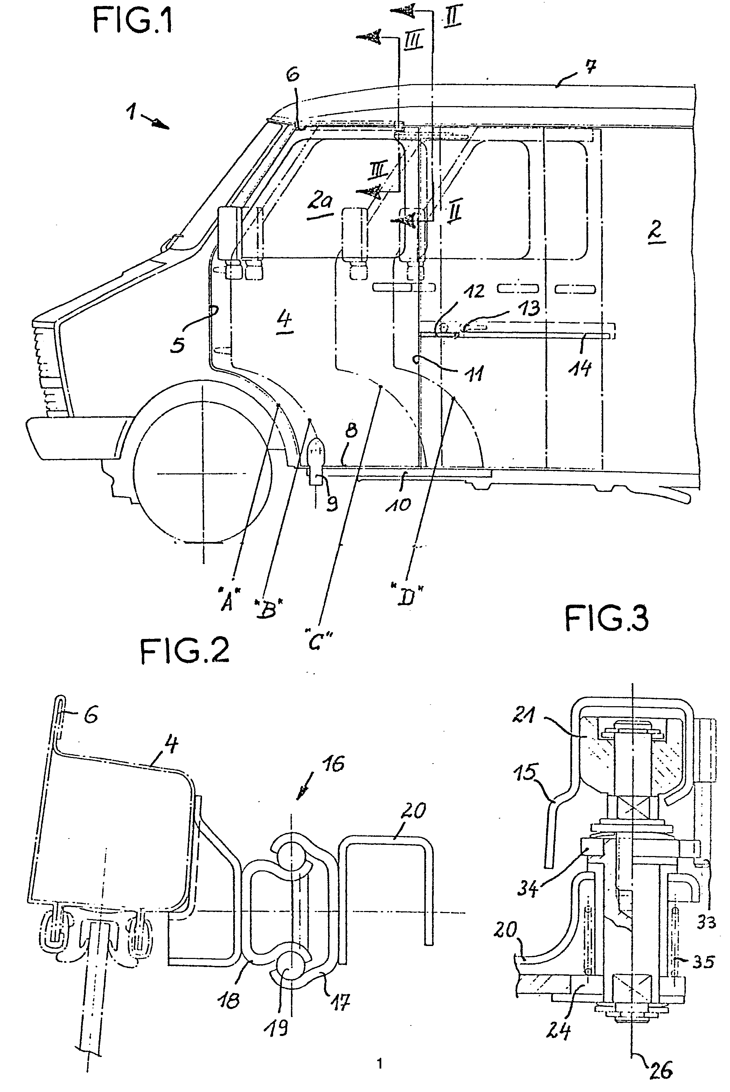

Figur 1 zeigt ein Nutzfahrzeug 1 mit einem geschlossenen Kastenaufbau 2 und mit einem in den Kastenaufbau 2 integrierten Fahrerhaus 2a. Das Fahrerhaus 2a hat auf der Fahrer- und Beifahrerseite je eine Ein- und Ausstiegsöffnung, die jeweils durch eine Tür verschließbar ist. Gemäß Fig. 1 ist die fahrerseitige Ein- und Ausstiegsöffnung 3 mittels einer Schwenkschiebetür 4 verschlossen. Die Führung und Lagerung der Schwenkschiebetür 4 am Kastenaufbau 2 erfolgt in drei Punkten und zwar ist die der Öffnungsrichtung abgewandte Türseite 5 über an der oberen Türkante 6 angeordnete Rollen in einer am Dach 7 befestigten Schiene, die untere Türseite 8 über eine Rolle 9 in einer unterhalb der Einstiegskante am Boden des Kastenaufbaues 2 längsverlaufenden Schiene 10 und die in Öffnungsrichtung liegende Türseite 11 etwa in halber Türhöhe über einen Gelenkhebel 12 und Rollen 13 in einer in der Seitenwand des Kastenaufbaues 2 eingelassenen Schiene 14 gehalten. In Fig. 1 sind die geschlossene Stellung « A » der Schwenkschiebetür 4 durch Voll-Linien und die einzelnen Öffnungsstellungen « B », « C » und « D » durch strichpunktierte Linien dargestellt.

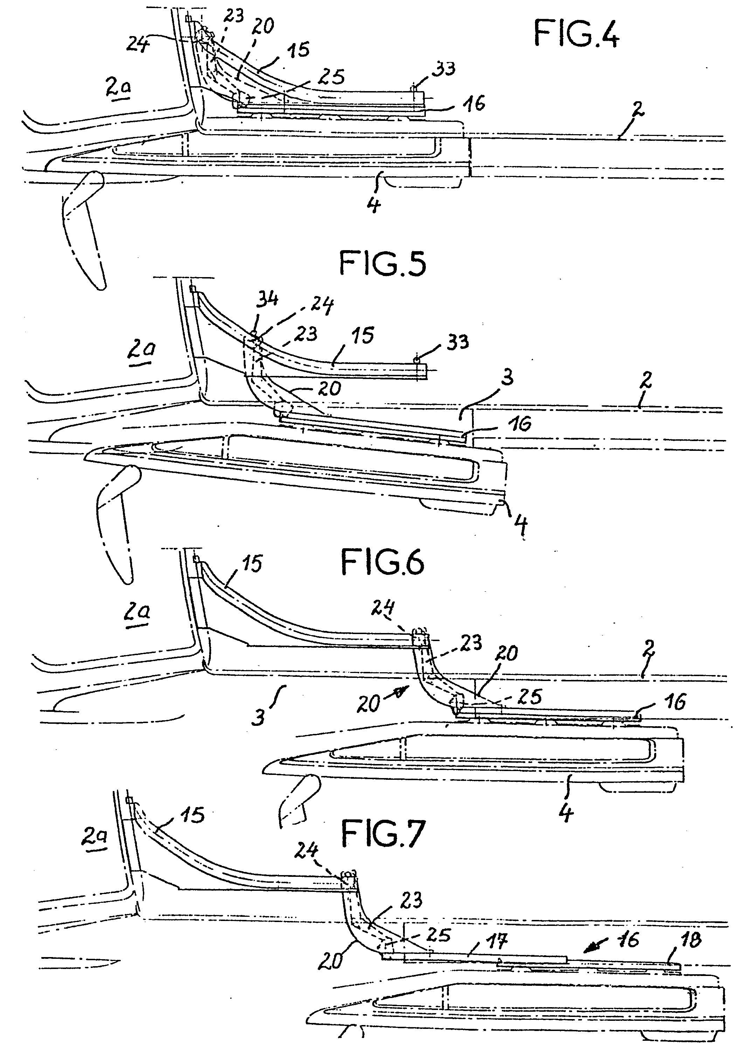

Gemäß den Fig. 4 bis 7 besteht die der Erfindung zugrundeliegende obere Türführung aus zwei Schienenabschnitten 15 und 16. Der Schienenabschnitt 15 ist innerhalb der Fahrerkabine im Bereich des Fahrzeugdaches 7 an tragenden Elementen des Kastenaufbaues 2 befestigt. Die Lage und Form des festen Schienenabschnittes 15 innerhalb der Fahrerkabine ist entsprechend dem Verlauf der Karosserie auf die Öffnungsbewegung der Schwenkschiebetür 4 abgestimmt. Die Länge des aufbaufesten Schienenabschnittes 15 entspricht etwa der Breite der Türöffnung. Unabhängig vom Schienenabschnit 15 ist der Schienenabschnitt 16 an der Innenseite der Tür 4 im Bereich der oberen horizontal verlaufenden Türseite 6 befestigt. Der Schienenabschnitt 16 besteht aus zwei teleskopartig über Rollen 19 ineinander verschiebbar gehaltenen Schienen 17 und 18, von denen die Schiene 18 an der Schwenkschiebetür 4 und die Schiene 17 über eine Konsole 20 mit dem Schienenabschnitt 15 verbunden ist. Damit der Schienenabschnitt 16 in dem Schienenabschnitt 15 leicht bewegt werden kann, ist an dem vorderen freien Ende der Konsole 20 eine Rolle 21 gelagert, die innerhalb des Schienenabschnittes 15 gehalten ist (Fig. 3).

Wie den Fig. 4 bis 6 zu entnehmen ist, befinden sich die Schienen 17 und 18 während einer ersten Öffnungsphase der Schwenkschiebetür in zusammengeschobener Stellung, in der sie gegen Relativbewegungen durch ein Sperrglied 22 arretiert sind. Das Sperrglied 22 besteht aus einem an der Konsole 20 gelagerten Schwinghebel 23, der etwa 2 gleichlange Schwingarme aufweist, deren Enden 23a und 23b jeweils an einer mit dem Schwinghebel zusammenwirkenden Riegelplatte 24 bzw. 25 anliegen.

Aus Fig. 3 ist zu erkennen, daß die Riegelplatte 24 am vorderen Ende der Konsole 20 zusammen mit der Laufrolle 21 um eine gemeinsame Achse 26 schwenkbar gelagert ist. Die Schwenkbewegung der Riegelplatte 24 wird durch einen an dem der Fahrtrichtung abgewandten Ende des Schienenabschnittes 15 befestigten Anschlag 33, gegen den ein mit der Riegelplatte 24 zusammenwirkender Nocken 34 zur Anlage gebracht werden kann, eingeleitet.

Die Riegelplatte 25 ist ihrerseits am schienenseitigen Ende der Konsole 20 schwenkbar angeordnet. Weiterhin hat die Riegelplatte 25 einen Schlitz 31, in den ein an der Unterseite des in Fahrtrichtiem vorne liegenden Endes der Schiene 18 befestigter Stift 32 einführbar ist.

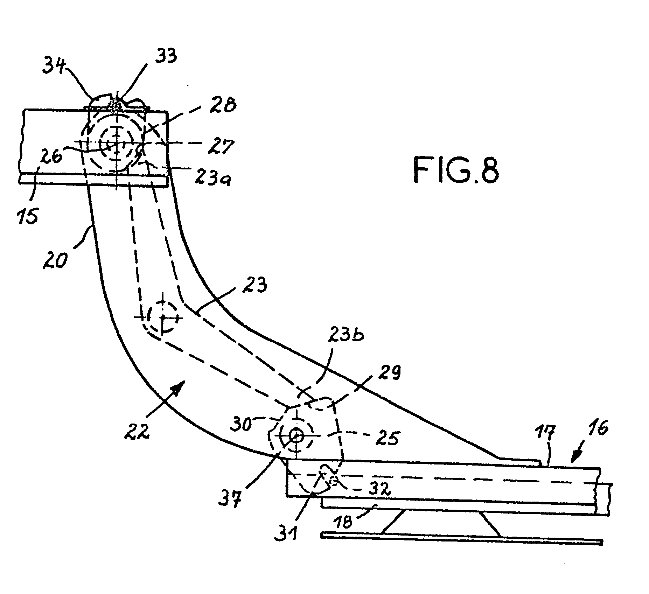

Wie insbesondere aus Fig. 8 zu erkennen ist, besitzen beide Riegelplatten 24, 25 jeweils zwei mit unterschiedlichem Radius von ihrer Schwenkachse 26, 37 entferntliegende Anlage flächen 27 und 28 bzw. 29 und 30, an denen der Schwinghebel 23 mit seinen Enden wechselweise anliegt. Die Bewegung der Riegelplatten 24, 25 in ihre Sperrstellungen wird jeweils durch eine Feder unterstützt, von denen nur die Feder 35 der Riegelplatte 24 in Fig. 3 zu sehen ist.

Die in der ersten Öffnungsphase der Schwenkschiebetür 4 gegeneinander arretierten Schienen 17 und 18 können mit Hilfe des Sperrgliedes 22 wie nachfolgend beschrieben, automatisch ent- und verriegelt werden. Ausgangspunkt für die Funktionsbeschreibung ist die vorläufige Offenstellung der Tür 4, wie sie in den Fig. 6 und 8 dargestellt ist. Das Sperrglied 22 befindet sich hier in der entriegelten Stellung nach-dem die Riegelplatte 24 über den Anschlag 33 und den Nocken 34 entgegen der Kraft der Feder 35 so verschwenkt wurde, daß die Anlagefläche 27 mit Spiel am Ende 23a des Schwinghebels 23 anliegt. Außerdem ist die weitere Bewegung der Tür im Schienenabschnitt 15 durch den am Anschlag 33 anliegenden Nocken 34 blockiert. Wird nun die Tür aus der Position « C » in die Position « D » verschoben, so wird zunächst die Riegelplatte 25 über den Stift 32 entgegen dem Uhrzeigersinn soweit verschwenkt, bis der Schwinghebel 23 mit seinem Ende 23b an der Anlagefläche 29 anliegt. Dabei wird der Schlitz 31 ebenfalls verschwenkt und befindet sich in einer Stellung, in der der Stift 32 ohne Widerstand aus diesem herausgleiten kann. Die weitere Führung der Schwenkschiebetür 4 wird nun von dem Schienenabschnitt 15 auf den Schienenabschnitt 16 übertragen, wobei sich die türfeste Schiene 18 gegenüber der Schiene 17 verschiebt, d. h., der längenveränderliche Schienenabschnitt 16 bewegt sich aus der zusammengeschobenen in die ausgezogene Position. Beim Schließen der Tür aus der Stellung « D » in die Position « C » werden die Schienen 17 und 18 zunächst zusammengeschoben. Dabei gelangt der Stift 32 in den Schlitz 31 und verschwenkt die Riegelplatte 25 soweit im Uhrzeigersinn, bis der Schlitz 31 etwa senkrecht zur Verschiebeachse der Schienen 17 und 18 liegt. Gleichzeitig wurde die Verbindung zwischen der Anlagefläche 29 und dem türseitigen Ende des Schwinghebels 23 gelöst und die Anlagefläche 30 in Anlageposition mit dem Ende 23b des Schwinghebels 23 gebracht. Da die Anlagefläche 30 einen kleineren Abstand von der Schwenkachse 38 hat als die Anlagefläche 29, ergibt sich nun zwischen dem Ende 23b und der Anlagefläche 29 ein geringes Spiel.

Die weitere Bewegung der Tür aus der Position « D » in die Position « B » bzw. « A » wird nun über einen schienenseitigen Anschlag von dem äußeren Schienenabschnitt 16 über die Konsole 20 auf den innenliegenden Schienenabschnitt 15 übertragen und von der Laufrolle 21 übernommen. Dabei löst sich der Nocken 34 von Anschlag 33. Unterstützt durch die Kraft der Feder 35 und infolge des Spiels zwischen dem türseitigen Ende 23b und der Anlagefläche 30 bewegt sich die Riegelplatte 24 im Uhrzeigersinn um ihre Schwenkachse 26 unter gleichzeitiger Verschwenkung des Schwinghebels 23 — ebenfalls im Uhrzeigersinn — so weit, bis das türseitige Ende 23b fest an der Anlagefläche 30 und das rollenseitige Ende 23a an der Anlagefläche 28 anliegt.

In dieser Stellung sind die Riegelplatten 24, 25 und die Schienen 17, 18 gegeneinander arretiert. Die Tür 4 kann nun innerhalb des Schienenabschnittes 15 bis in die Schließstellung bewegt werden. Das Lösen der gesperrten Riegelplatte 25 erfolgt in umgekehrter Weise wie der Verriegelungsvorgang. Beim Öffnen der Tür bewegt sich diese zunächst innerhalb des Schienenabschnittes 15. In der vorläufigen Offenstellung C stößt der Nocken 34 gegen den Anschlag 33 und verschwenkt dabei die Riegelplatte 24 entgegen dem Uhrzeigersinn in eine Stellung, in der die Anlagefläche 27 im Bereich des rollenseitigen Endes 23a des Schwinghebels 23 liegt. Da die Anlagefläche 27 einen kleineren Abstand von der Schwenkachse 37 hat als die Anlagefläche 28, ergibt sich nun ein Spiel zwischen dem rollenseitigen Ende 23a und der Anlagefläche 27. Durch das vorhandene Spiel kann nun seinerseits — wie bereits beschrieben — bei einer weiteren Bewegung der Tür 4 die Riegelplatte 25 in die aus Fig. 8 ersichtliche Entriegelstellung verschwenkt werden.

**Patentansprüche**

1. Vorrichtung zur Führung einer Schwenkschiebetür (4) am Fahrerhaus (2a) eines Fahrzeuges (1), insbesondere eines Nutzfahrzeuges, deren in Öffnungsrichtung liegende Türseite (11) auf halber Türhöhe mittels eines Gelenkhebels (12) aus der Karosserieebene geschwenkt und in einer an der Seitenwand der Karosserie befestigten Schiene (14) verschiebbar geführt wird, wobei die der Öffnungsrichtung abgewandte Türseite (5) über im Bereich der oberen und unteren Türseite angeordnete Rollen (9, 21) in an der Karosserie befestigte Führungsschienen (10, 15) gehalten ist, gekennzeichnet durch folgende Merkmale :

a) die obere Führung der Tür (4) weist einen an der Innenseite der Fahrerhauskarosserie im bereich des Daches (7) angebrachten und sich im wesentlichen über die Breite des Türausschnittes erstreckenden ortsfesten Schienenabschnitt (15) und einen an der Türinnenseite befestigten längenveränderlichen Schienenabschnitt (16) auf ;

b) der längenveränderliche Schienenabschnitt (16) besteht aus zwei teleskopartig relativ zueinander verschiebbaren Schienenteilen (17, 18), wobei das erste Schienenteil an der Tür (4) befestigt ist und an dem zweiten relativ zur Tür (4) verschiebbaren Schienenteil (17) am vorderen Ende eine Rolle (21) gelagert ist ;

c) die beiden relativ zueinander verschiebbaren Schienenteile (17, 18) überdecken sich in geschlossener Stellung der Tür am weitesten ;

d) in der ersten Öffnungsphase der Schwenkschiebetür (4) verschiebt sich die in dem ortsfesten Schienenabschnitt (15) geführte Rolle (21) mit gegen Relativbewegungen mittels eines Sperrgliedes (22) arretierten Schienenteilen (17, 18) in Öffnungsrichtung bis zu einer vorläufigen Offenstellung (c), in der die Tür (4) teilweise geöffnet ist ;

e) das Sperrglied (22) ist im Bereich der Rolle (21) an dem verschiebbaren Schienenteil (18) befestigt und wird bei Erreichen der vorläufigen Offenstellung (c) über einen im Bereich des in Öffnungsrichtung liegenden Endes des ortsfesten oberen Schienenabschnittes (15) an der Karosserie befestigten Anschlag (33) zur Freigabe der Relativbewegung der Schienenteile (17, 18) des längenveränderlichen Schienenabschnitts entriegelt bzw. umgekehrt während der Schließbewegung der Tür (4) wieder verriegelt.

2. Vorrichtung nach Anspruch 1, dadurch gekennzeichnet, daß die Rolle (21) über eine Konsole (20) mit der Schiene (17) verbunden ist.

3. Vorrichtung nach einem der Ansprüche 1 und 2, dadurch gekennzeichnet, daß an der Konsole (20) das Sperrglied (22) angebracht ist.

4. Vorrichtung nach einem der Ansprüche 1 bis 3, dadurch gekennzeichnet, daß das Sperrglied (22) aus einem an der Konsole (20) schwenkbar gelagerten Schwinghebel (23) und zwei mit diesem zusammenwirkenden Riegelplatten (24, 25) besteht.

5. Vorrichtung nach einem der Ansprüche 1 bis 4, dadurch gekennzeichnet, daß die Riegelplatte (24) schwenkbar an der Rolle (21) und die Riegelplatte (25) schwenkbar am schienenseitigen Ende der Konsole (20) angeordnet ist.

6. Vorrichtung nach einem der Ansprüche 1 bis 5, dadurch gekennzeichnet, daß die Riegelplatten (24 bzw. 25) jeweils zwei mit unterschiedlichem Radius von ihren Schwenkachsen (26, 37) entfernt liegende Anlageflächen (27, 28 und 29, 30) aufweisen, an denen der Schwinghebel (20) je nach Stellung der Tür (4) wechselweise anliegt.

7. Vorrichtung nach einem der Ansprüche 1 bis 6, dadurch gekennzeichnet, daß zur Verriegelung des längenveränderlichen Schienenabschnittes (16) die zugeordnete Riegelplatte (25) einen Schlitz (31) aufweist, in den ein an dem in Fahrtrichtung vorne liegenden Ende der türfesten Schiene (18) angebrachter Stift (32) einführbar ist.

8. Vorrichtung nach einem der Ansprüche 1 bis 7, dadurch gekennzeichnet, daß die an der Rolle (21) vorgesehene Riegelplatte (24) von einem auf der Rollenlaufachse (26) gelagerten Nocken (34) verschwenkbar ist, der seinerseits mit einem an dem der Fahrtrichtung abgewandten rückwärtigen Ende des karosseriefesten Schienenabschnittes (15) angebrachten Anschlag (33) zusammenwirkt.

9. Vorrichtung nach einem der Ansprüche 1 bis 8, dadurch gekennzeichnet, daß zur Unterstützung der Schwenkbewegung der Riegelplatten (24 bzw. 25) in ihre Sperrstellung jeweils eine Feder (35) vorgesehen ist.

## Claims

1. A device for guiding a pivotable sliding door (4) along the driver's cab (2a) of a vehicle, particularly of a commercial vehicle, in which the lateral door face (11) pointing in the door-opening direction is arranged to be pivoted — by means of a toggle joint (12) — out of the plane containing the vehicle body about a point halfway the door height and to be slidably guided in a rail (14) fastened to the body's side wall, and in which the lateral door face (5) opposite the door-opening direction is held — by means of rollers (9, 21) arranged on the door in the vicinity of its top and bottom faces — in guide rails (10, 15) fastened to the vehicle body, characterized by the following features :

a) the top guide means for the door (4) comprise : a stationary rail section (15) extending substantially across the width of the door aperture and being fastened in the vicinity of the roof (7) to the inner surface of the body part defining the driver's cab ; and a length-adjustable rail section (16) secured to the inner surface of the door ;

b) the length-adjustable section (16) comprises two rail subsections (17, 18) telescopically slidable in relation to each other, one of said subsections being secured to the door (4) and the other one (17) being slidable in relation to the door (4) and carrying the roller (21) mounted at its front end ;

c) the two rail subsections (17, 18) slidable in relation to each other overlap one another to the greatest extent in the door's closing position ;

d) the roller (21), which is guided in the stationary rail section (15), together with the rail subsections (17, 18), which are locked by a blocking element (22) against relative motion, slide during the initial opening stage of the pivotable sliding door (4) in the opening direction to a preliminary opening position (c) in which the door (4) is partly opened ;

e) the blocking element (22) is secured in the vicinity of the roller (21) to the slidable rail subsection (18) and is arranged to be unlatched, upon reaching the preliminary opening position (c), by a trip drog (33), which is fastened to the body in the vicinity of the stationary rail sections (15) end pointing in the opening direction, so as to permit the relative sliding motion of the rail subsections (17, 18) of the length-adjustable rail section and, vice versa, is arranged to be relatched when the door (4) is moved into its closing position.

2. A device according to claim 1, characterized in that the roller (21) is connected by a bracket (20) to the rail subsection (17).

3. A device according to claim 1 or claim 2, characterized in that the blocking element (22) is secured to the bracket (20).

4. A device according to any of the claims 1 to 3, characterized in that the blocking element (22) comprises a rocking lever (23) pivotably mounted on the bracket (20) and two latching plates (24, 25) interacting with the lever.

5. A device according to any of the claims 1 to 4, characterized in that one (24) of the latching plates is pivotably mounted on the roller (21) and the other latching plate (25) is pivotably mounted on the bracket (20) at the end thereof which is close to the rail.

6. A device according to any of the claims 1 to 6, characterized in that each of the latching plates (24 and 25 respectively) has two contact faces (27, 28 and, respectively, 29, 30) spaced at different radii from the respective plates' pivot axes (26 and 37 respectively), and in that, depending on the position of the door (4), the rocking lever (20) abuts alternately on one of the contact faces of each plate.

7. A device according to any of the claims 1 to 6, characterized in that the other latching plate (25) associated with the length-adjustable rail section (16) is provided, for the purpose of locking said section, with a slot (31) into which a pin (32) mounted on the — in driving direction — front end portion of the stationary rail subsection (18) is insertable.

8. A device according to any of the claims 1 to 7, characterized in that the one latching plate (24) mounted on the roller (21) is arranged to be pivoted by a cam (34) supported by the roller shaft (26), and in that the cam interacts with the trip dog (33) fastened to the body-mounted rail section (15) at the rear end thereof which is opposite the driving direction.

9. A device according to any of the claims 1 to 8, characterized in that each of the latching plates (24 and 25) is provided, for the purpose of assisting its pivotal motion into the locking position, with a spring (35).

**Revendications**

1. Dispositif pour le guidage d'une porte pivotante et coulissante (4) sur la cabine de conducteur (2a) d'un véhicule, notamment d'un véhicule utilitaire, dont le côté de porte (11) placé en direction de l'ouverture est pivoté, sur la mi-hauteur de la porte, au moyen d'un levier articulé (12) hors du plan de la carrosserie et est guidé pour pouvoir coulisser dans un rail (14) fixé sur la paroi latérale de la carrosserie, auquel cas le côté de porte (5) opposé à la direction d'ouverture est maintenu, par des galets de roulement (9, 21) disposés dans le domaine du côté supérieur et du côté inférieur, dans des rails de guidage (10, 15) fixés sur la carrosserie, dispositif caractérisé par les points suivants :
a) le guidage supérieur de la porte (4) comprend un tronçon de rail (15) fixé sur le côté intérieur de la carrosserie de la cabine du conducteur dans la zone du toit (7) et s'étendant essentiellement sur toute la largeur de l'ouverture de la porte et un autre tronçon de rail (16) de longueur modifiable qui est fixé sur la face intérieure de la porte ;
b) le tronçon de rail de longueur modifiable (16) consiste en deux parties de rail (17, 18) coulissables télescopiquement l'un par rapport à l'autre, dont la première partie du rail est fixée à la porte (4) et un galet de roulement (21) est monté sur l'extrémité antérieure de la seconde partie du rail (17) coulissante par rapport à la porte (4) ;
c) les deux tronçons de rail coulissants l'un par rapport à l'autre (17, 18) se superposent au maximum dans la position fermée de la porte ;
d) dans la première phase d'ouverture de la porte pivotante et coulissante (4), le galet de roulement (21) qui est guidé dans le tronçon de rail à poste fixe (15) se déplace avec des déplacements relatifs opposés des parties de rail (17, 18) arrêtés au moyen d'un organe de blocage (22) en direction de l'ouverture jusqu'à une position d'ouverture provisoire « C » dans laquelle la porte (4) est partiellement ouverte ;
e) l'organe de blocage (22) est fixé dans la zone du galet (21) à la porte de rail coulissante (18), et, lorsqu'est atteinte la position d'ouverture provisoire de la porte « C », il est déverrouillé, par l'intermédiaire d'une butée (33) fixée à la carrosserie, dans la zone de l'extrémité du tronçon de rail (15) à poste fixe se trouvant en direction d'ouverture, pour libérer le déplacement relatif des parties de rail (17, 18) du tronçon de rail de longueur modifiable et, inversement, pour le verrouiller à nouveau pendant le déplacement de fermeture de la porte (4).

2. Dispositif suivant la revendication 1, caractérisé en ce que le galet (31) est relié au rail (17) par l'intermédiaire d'une console.

3. Dispositif suivant l'une des revendications 1 et 2, caractérisé en ce que l'organe de blocage (22) est monté sur la console (20).

4. Dispositif suivant l'une quelconque des revendications 1 à 3, caractérisé en ce que l'organe de blocage (22) se compose d'un levier oscillant (23) supporté à pivotement sur la console (20) et de deux plaques de verrou (24, 25) coopérant avec ce levier.

5. Dispositif suivant l'une quelconque des revendications 1 à 4, caractérisé en ce que la plaque de verrou (24) est montée pivotante sur le galet (21) et la plaque de verrou (25) est montée pivotante sur l'extrémité côté rail de la console (20).

6. Dispositif suivant l'une quelconque des revendications 1 à 5, caractérisé en ce que les plaques de verrou (24 et 25) présentent chacune deux surfaces d'application (respectivement 27, 28 et 29, 30) éloignées avec des rayons différents de leurs axes de pivotement (26, 37) et sur lesquelles le levier oscillant (20) s'appliquent alternativement suivant la position de la porte (4).

7. Dispositif suivant l'une quelconque des revendications 1 à 6, caractérisé en ce que, pour le verrouillage du tronçon de rail (16) de longueur modifiable, la plaque de verrou (25) qui lui est affectée présente une fente (31) dans laquelle peut être engagée une broche (32) qui est disposée sur l'extrémité du rail (18) solidaire de la porte qui se trouve en avant en direction du déplacement.

8. Dispositif suivant l'une des revendications 1 à 7, caractérisé en ce que la plaque de verrou (24) prévue sur le galet (21) est pivotable par une came (34) supportée sur l'axe du galet (26), laquelle, de son côté, coopère avec une butée (33) montée sur l'extrémité arrière, opposée à la direction de déplacement, du tronçon de rail (15) solidaire de la carrosserie.

9. Dispositif suivant l'une quelconque des revendications 1 à 8, caractérisé en ce que pour aider au mouvement de pivotement des plaques de verrou (24 et 25) dans leur position de verrouillage, il est prévu un ressort (35) sur chacune d'elles.

**0 063 281**

FIG.1

FIG.2

FIG.3

FIG.4

FIG.5

FIG.6

FIG.7

FIG.8